(19) Europäisches Patentamt / European Patent Office / Office européen des brevets

(11) **EP 2 917 615 B1**

(12) **EUROPÄISCHE PATENTSCHRIFT**

(45) Veröffentlichungstag und Bekanntmachung des Hinweises auf die Patenterteilung:
**14.12.2016 Patentblatt 2016/50**

(21) Anmeldenummer: **13766944.6**

(22) Anmeldetag: **23.09.2013**

(51) Int Cl.:
**F16J 9/20** $^{(2006.01)}$

(86) Internationale Anmeldenummer:
**PCT/EP2013/069692**

(87) Internationale Veröffentlichungsnummer:
**WO 2014/072113 (15.05.2014 Gazette 2014/20)**

(54) **KOLBENRING MIT VARIIERENDER SCHEITELPUNKTLINIE**

PISTON RING WITH VARYING APEX LINES

SEGMENT DE PISTON À LIGNE DE SOMMET VARIABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012 DE 102012220464**

(43) Veröffentlichungstag der Anmeldung:
**16.09.2015 Patentblatt 2015/38**

(73) Patentinhaber: **Federal-Mogul Burscheid GmbH 51399 Burscheid (DE)**

(72) Erfinder:
• **MITTLER, Richard**
**51399 Burscheid (DE)**
• **NATHEM, Frank**
**86415 Mering (DE)**

(74) Vertreter: **Becker Kurig Straus**
**Patentanwälte**
**Bavariastrasse 7**
**80336 München (DE)**

(56) Entgegenhaltungen:
**EP-A2- 1 762 756     DE-C- 871 390**
**FR-A- 769 038     US-A- 3 851 889**

**Beschreibung**

Die vorliegende Erfindung betrifft einen Kolbenring für einen Verbrennungsmotor bzw. für einen Kompressor, insbesondere einen Kolbenring mit einer auf der in Umfangsrichtung verlaufenden Lauffläche angeordneten Scheitelpunktlinie, die in axiale Richtung periodisch variiert.

Moderne, großvolumige Motoren für Schiffe sind nach wie vor Zweitakt-Dieselmotoren, da diese Art von Motoren so konstruiert werden können, dass deren Drehzahl typischerweise in einem Bereich von ungefähr 50 U/min bis zu 250 U/min (typischerweise unter 100 U/min) liegt und deren Leistung je nach Zahl der Zylinder bis zu ungefähr 100 MW erreichten kann. Derartige großvolumige, langsam laufende Zweitakt-Schiffmotoren wirken bevorzugt unmittelbar auf die Antriebswelle(n) des/der Propeller(s), da aufgrund ihrer Drehzahl auf ein Untersetzungsgetriebe zur Drehzahlreduzierung verzichtet werden kann.

Typischerweise haben derartige großvolumige, Zweitakt-Motoren zwei getrennte Ölkreisläufe, einen für die Motorschmierung und einen für die Zylinderschmierung. Die Zylinderschmierung stellt sicher, dass zu einem geeigneten Zeitpunkt genug Schmieröl zur Verfügung gestellt wird, um eine ausreichende Schmierung der Zylinderoberflächen bzw. der Kolbenringe zu gewährleisten.

Das Zylinderschmieröl wird, abhängig von der Last der Maschine, durch die Laufbuchse in den Kolbenraum eingespritzt. Auf diesem Schmierfilm, dem Tragspiegel, laufen die Kolbenringe. Dabei kommt es unter anderem darauf an, so wenig Schmieröl wie möglich einzuspritzen, um Kosten zu sparen und eine Überschmierung zu verhindern. Die Zylinderschmierung erfolgt beispielsweise im oberen Hub-Drittel, indem Schmieröl durch eine Schmierölpumpe durch Schmieröleinlässe, die beispielsweise in einer Ebene in der Zylinderwand vorgesehen sind, in den Zylinder zugeführt wird, so dass die Schmierung des Kolbens und des Kolbenringes möglichst optimal gewährleistet wird. Die Ölzufuhr in die Zylinder erfolgt üblicherweise im Gasgegendruckverfahren.

Beispielsweise kann ein Schmieröleinspritzsystem eingesetzt werden, das Schmieröl genau dosiert über Düsen in die Zylinder eingespritzt. Eine computergesteuerte Anlage registriert, in welcher Position sich ein Kolben befindet und führt dann gezielt Schmieröl zu. Dies geschieht mit hohem Druck, so dass das Schmieröl sehr fein versprüht wird, um eine möglichst gleichmäßige Benetzung der Zylinderlaufbuchse zu erhalten, gezielt aber dort, wo sich die Kolbenringe befinden und wo die Reibung tatsächlich stattfindet.

Berücksichtigt man, dass moderne, großvolumige Zweitakt-Schiffmotoren mit einer Drehzahl von ungefähr 50 U/min bis zu 250 U/min bei einem Hub von bis zu 2500 mm betrieben werden, ist die Zeitspanne, die für die Zufuhr des Schmieröls und die Verteilung des zugeführten Schmieröls zur Verfügung steht, gering bemessen und stellt große Herausforderungen an die Sicherstellung der Qualität der Schmierung. Nimmt man beispielsweise an, dass ein Zylinder einen (Innen-) Durchmesser von 900 mm aufweist und 8 über den Umfang gleichverteilte Zugänge für die Ölzufuhr in der Zylinderwand vorgesehen sind, muss sich das zugeführte Schmieröl ausgehend von den jeweiligen Zugängen in der bereitgestellten Zeitspanne über eine Länge von ca. 350 mm in Umfangsrichtung verteilen.

Es sind z.B. aus dem Patent US 3851889 Kolbenringe bekannt, bei denen durch eine einseitig an der Lauffläche des Rings angebrachte Abschrägung und darin vorgesehene um den Umfang herum führende Rillen bzw. Ausnehmungen Turbulenzen im Ölfluss erzeugt werden sollen, wodurch der Ölfluss im System hauptsächlich in eine bevorzugte Richtung der Kolbenbewegung (nach unten) geführt werden soll. In der Patentschrift DE 871 390 sind Kolbenringe beschrieben, die über den Umfang hinweg in der Lauffläche mit taschenartigen Vertiefungen versehen sind, die das Eindringen von Öl in den Zwischenraum zwischen aufeinander gleitenden Flächen erleichtern sollen.

Es zeigt sich, dass bei konventioneller Gestaltung des einen oder mehrerer Kolbenringe aufgrund fehlender Druckgradienten in Umfangsrichtung keine bzw. lediglich eine sehr geringe Verteilung des Schmieröls in Umfangsrichtung (maximal ca. 3%) erhalten wird.

Anwendung der vorliegenden Erfindung ist vorgesehen bei allen Verbrennungsmotoren, auch außerhalb des Schiffseinsatzes.

Aufgabe der vorliegenden Erfindung ist es, einen Kolbenring bereitzustellen, der bei ausreichenden Schmierverhältnissen sowohl einen niedrigen Ölverbrauch und einen geringeren Leckgasdurchlass (Blow-By) gewährleistet als auch günstig herstellbar ist.

Die Lösung dieses Problems erfolgt durch einen Kolbenring mit den Merkmalen des Anspruchs 1. Bevorzugte Ausgestaltungen sind Gegenstand der Unteransprüche.

Erfindungsgemäß wird ein neuartiges Laufflächenprofil für einen Kolbenring vorgeschlagen. Die Lauffläche des Kolbenringes weist ein im Wesentlichen konvex ballig ausgebildetes Profil mit einem Scheitelpunkt bzw Pivotpunkt auf, dessen axiale Position auf der Lauffläche bezüglich der Umfangsrichtung variiert.

Eine derart gestaltete Lauffläche des Kolbenringes bewirkt, dass sich im laufenden Betrieb hydrodynamische Drücke (insbesondere mit der axialen Position des Scheitelpunkts variierend) in der Umlaufrichtung aufbauen bzw. auftreten. Diese hydrodynamische Drücke haben Druckgradienten zur Folge, die Schmierölflüsse veranlassen und eine Umverteilung des Schmieröls verursachen. Die hydrodynamisch bewirkte Umverteilung des Schmieröls führt zu einer Reduzierung der erforderlichen Menge und einer bezüglich der Umfangsrichtung gleichmäßigeren Verteilung des in die Nut zugeführten oder eingespritzten Schmieröls.

Somit wird wie gewünscht ein auf den Umfang bezogen gleichmäßiger Tragspiegel aus Schmieröl erhalten, um ausreichende Schmierverhältnisse zu gewährleisten, möglichst gleichmäßig gegen Leckgasdurchlass (Blow-By) abzudichten (bzw. einen möglich geringen Leckgasdurchlass (Blow-By) zu erhalten), das Schmieröl in Arbeitsrichtung des Kolbes effektiv abstreifen zu können und ein Überlaufen zu ermöglichen.

Ein Aspekt der vorliegenden Erfindung liegt darin, dass das Öl in Umfangsrichtung transportiert wird, so dass weniger Öl verbraucht wird. Dazu wird der Scheitelpunkt in Umfangsrichtung über die axiale Höhe stetig variiert bzw. verändert, wobei aber bevorzugt auf der Lauffläche keine Ausnehmungen oder Löcher oder Schlitze vorhanden sind, wie es sie beim Stand der Technik gibt.

Bevorzugt wird ferner ein System aus mindestens zwei Kolbenringen bereitgestellt. Zwei der Kolbenringe sind jeweils entsprechend der vorliegenden Erfindung ausgebildet. Die Verläufe der periodisch variierenden, axialen Positionen der Scheitelpunkte der zwei erfindungsgemäßen Kolbenringe sind in der Systemanordnung um 180° in der Phase versetzt.

Der Kolbenring ist bevorzugt so ausgebildet, dass die Variation der axialen Position des Scheitelpunktes in Umfangsrichtung periodisch ist und bevorzugt die Zahl der Perioden der periodisch variierenden, axialen Position ganzzahlig ist.

Ferner ist bevorzugt, dass bei dem Kolbenring der Verlauf der axialen Position des Scheitelpunktes (B1) im Wesentlichen symmetrisch bezüglich einer Ebene ist, die parallel zu der Mittelebene des Kolbenringes 1 ist oder identisch mit dieser ist.

Ferner ist bevorzugt bei dem Kolbenring der Verlauf der axialen Position des Scheitelpunktes (B1) asymmetrisch bezüglich einer Ebene, die parallel zu der Mittelebene des Kolbenringes 1 ist oder identisch mit dieser ist.

Ferner weist bei dem Kolbenring bevorzugt die axiale Position des Scheitelpunktes (B1) eine Gesamtvariation von ungefähr 50% bis 60% relativ zu der axialen Ausdehnung des Kolbenringes auf.

Ferner liegt bevorzugt bei dem Kolbenring die Zahl der Perioden des Verlaufs der axialen Position des Scheitelpunktes (B1) in einem Bereich zwischen einschließlich 4 und einschließlich 36.

Schließlich sind bei System aus mindestens zwei Kolbenringen bevorzugt die zwei Kolbenringe jeweils ein Kolbenring wie vorstehend angegeben und die Verläufe der periodisch variierenden, axialen Positionen der Scheitelpunkte der mindestens zwei Kolbenringe sind um 180° in der Phase versetzt.

Die Erfindung wird nachfolgend anhand der in den Zeichnungen dargestellten Ausführungsbeispiele näher erläutert, wobei

Figuren 1(a), 1(b), 1(c)　einen ersten (radialen) Querschnitt, einen zweiten (radialen) Querschnitt und einen dritten (radialen) Querschnitt durch einen Kolbenring gemäß einer Ausführungsform der vorliegenden Erfindung, jeweils zu unterschiedlichen Winkelpositionen zeigen;

Figur 2(a)　eine Aufsicht auf einen Ausschnitt der in Umfangsrichtung verlaufenden Lauffläche des Kolbenringes gemäß dem in Figur 1 gezeigten erfindungsgemäßen Kolbenring zeigt;

Figur 2(b)　einen Verlauf der Scheitelpunktlinie des Profils der Lauffläche entsprechend dem in Figur 2(a) gezeigten Ausschnitt der in Umfangsrichtung verlaufenden Lauffläche des Kolbenringes zeigt;

Figur 3　eine perspektivisch Ausschnittsansicht eines Kolbenringes einer weiteren, erfindungsgemäßen Ausführungsform zeigt; und

Figur 4　einen beispielhaften funktional beschriebenen Verlauf der Scheitelpunktlinie des Profils der Lauffläche gemäß einer weiteren Ausführungsform der vorliegenden Erfindung zeigt.

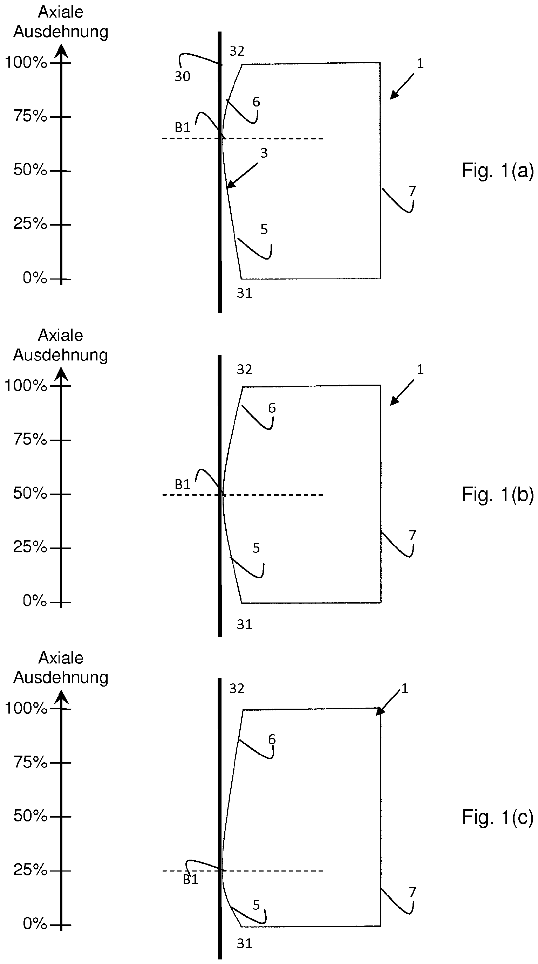

Die Figuren 1(a) bis 1(c) zeigen voneinander in Umfangsrichtung beabstandete (radiale) Querschnitte durch einen erfindungsgemäßen Kolbenring 1.

Der in Figur 1 gezeigte erfindungsgemäßer bevorzugt gleichzeitig als Verdichtungs- und Ölabstreifring wirkender Kolbenring 1 weist eine äußere, dem Verbrennungsraum abgekehrte, profilierte Seite, d.h. eine profilierte Lauffläche 3 des Kolbenringes 1, eine dem Brennraum 31 zugewandte Flanke 5, eine dem Ölraum 32 zugewandte Flanke 6 und eine innenseitige Umfangsfläche 7 auf.

Es soll bemerkt werden, dass, obgleich die vorstehende und nachfolgende Beschreibung Bezug auf die Verwendung des erfindungsgemäßen Kolbenringes 1 für einen Kolben in einem Verbrennungsmotor, insbesondere in einem Zweitakt-Verbrennungsmotor, nimmt, vom Fachmann unmittelbar verstanden wird, dass ein Kolbenring gemäß einer erfindungsgemäßen Ausführungsform auch in Kompressoren Anwendung finden kann.

Die Lauffläche 3 weist ein Profil auf, das im Wesentlichen konvex ballig ausgebildet und einen Scheitelpunkt B1 zeigt bzw. eine entlang des äußeren Umgangs verlaufende Scheitelpunktlinie 11 bildet.

Im Bereich der umfänglich verlaufenden Scheitelpunktlinie 11 dichtet der Kolbenring 1 gegenüber einer Gegenlauffläche 30 wie z.B. einer Zylinderlaufbuchse gegen Gasdurchlass aus dem Brennraum 31. Durch Kolbenbewegung bildet sich zwischen dem Kolbenring 1 und der Gegenlauffläche 30 ein hydrodynamischer Ölfilm aus, der sich aufgrund der Kolbenbewegung zwischen dem Kolbenring 1 und der Gegenlauffläche 30 ausbildet und der für eine ausreichende Schmierung zwischen diesen sorgt. In den Querschnittsansichten ist die in Umfangsrichtung verlaufende Scheitelpunktlinie 11 als Scheitelpunkte B1 dargestellt.

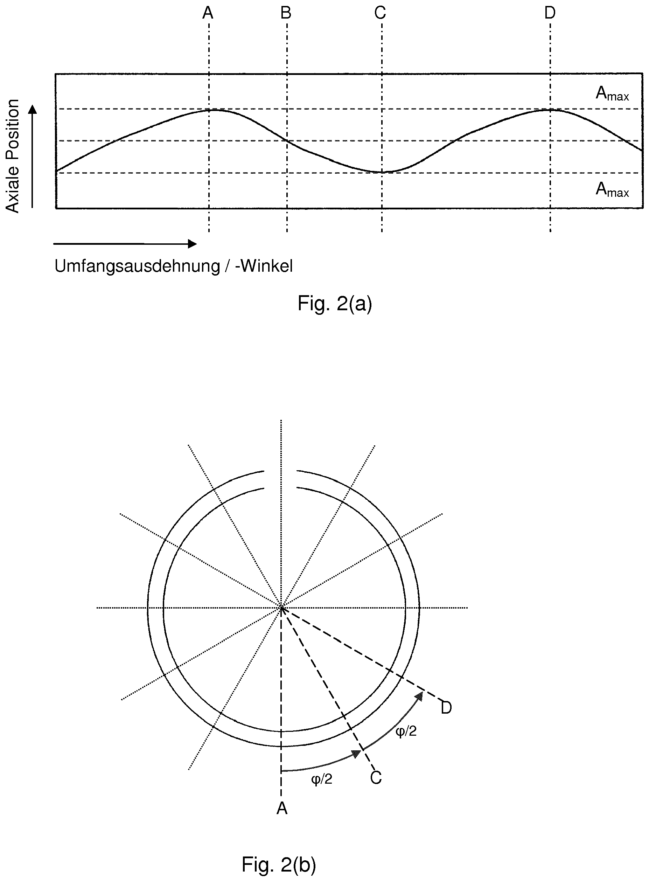

Wie bereits aus den Figuren 1(a) bis 1(c) entnommen werden kann, variiert den Scheitelpunkt B1 des Profils der Lauffläche 3 mit der Position des Querschnitts bezüglich des Umfangs in axialer Richtung des Kolbenringes 1. In Figur 2(b) ist eine Mittelposition des Scheitelpunktes B1 schematisch dargestellt, während die Figuren 2(a) und 2(c) mit maximalen Variationspositionen des Scheitelpunktes B1 in die zwei axialen Richtungen bezüglich der Mittelposition schematisch illustrieren.

Der Flächenschwerpunkt des Querschnitts des Kolbenringes 1 liegt bevorzugt in einer Ebene zwischen den beiden äußersten axialen Positionen des Scheitelpunktes B1. Hierdurch wird sichergestellt, dass der Kolbenring 1 im statischen Zustand über den gesamten Verlauf der Scheitelpunktlinie 11 an der Gegenlauffläche 30 anliegt bzw. eventuell durch einen dünnen, dazwischen liegenden Ölfilm (nicht gezeigt) davon minimal beabstandet ist.

Figur 2(a) zeigt eine Aufsicht auf einen Ausschnitt der in Umfangsrichtung verlaufenden Lauffläche 3 des erfindungsgemäßen Kolbenringes 1. Aus Figur 2(a) kann der in axialer Richtung periodisch variierende Verlauf des Scheitelpunktes B1 entnommen werden. Der hier beispielhaft illustrierte Verlauf ist symmetrisch zu einer Mittelebene des Kolbenringes 1. D.h. die axiale Position des Scheitelpunktes B1 variiert mit einer maximalen Amplitude bezüglich der Mittelebene des Kolbenringes 1.

Es soll bemerkt werden, dass die gezeigte Symmetrie lediglich eine bevorzugte Ausführungsform der vorliegenden Erfindung ist und die Erfindung nicht als beschränkt darauf zu verstehen ist. So kann zum Beispiel der Verlauf der axialen Position des Scheitelpunktes B1 auch symmetrisch bezüglich einer Ebene sein, die parallel zu und beabstandet von der Mittelebene des Kolbenringes 1 ist. Ferner kann der Verlauf der axialen Position des Scheitelpunktes B1 ebenso asymmetrisch gestaltet sein, d.h. dass die Amplituden des Verlaufs der axialen Position des Scheitelpunktes B1 in die beiden entgegengesetzten axialen Richtungen ausgehend von der Mittelebene des Kolbenringes 1 unterschiedlich sind.

In Figur 2(a) sind ferner Schnittpositionen A, B, C und D angezeigt. Die in Figur 1(a) illustrierte Querschnittsansicht wird bei einem Schnitt an der Position A bzw. D erhalten, während die in Figur 1(b) illustrierte Querschnittsansicht bei einem Schnitt an der Position B und die in Figur 1(c) illustrierte Querschnittsansicht bei einem Schnitt an der Position C erhalten wird.

Figur 2(b) zeigt eine Aussicht auf die Ebene des Kolbenringes 1. Die in der Figur 2(a) dargestellten Umfangspositionen bzw. Schnittpositionen A, B, C und D sind in der Kolbenringebene gezeigt. Die axiale Position des Scheitelpunktes B1 variiert periodisch entlang des äußeren Umfanges des Kolbenringes 1. In Figur 2(b) ist eine Periodizität von 6 beispielhaft illustriert. Das heißt, dass der Periodenwinkel bezüglich des Kolbenringumfangs in der illustrierten beispielhaften Ausführungsform $\varphi = 60°$ beträgt. Vorzugsweise liegen die Perioden der Variationen der axialen Position des Scheitelpunktes B1 in einem Bereich von einschließlich 4 ($\varphi = 90°$) bis einschließlich 36 ($\varphi = 10°$). Die Perioden sind vorzugsweise ganzzahlig und insbesondere gleich.

Es soll bemerkt werden, dass die Zahl der Perioden an die Zahl der Durchlasszugänge bzw. Düsen angepasst werden kann, durch die das Schmieröl beispielsweise im Gasgegendruckverfahren in den Zylinder eingedrückt bzw. eingespritzt wird. So kann beispielsweise die Zahl der Perioden gleich der Zahl der Durchlasszugänge bzw. Düsen oder aber auch ein ganzzahliges Vielfaches davon sein.

Die axiale Position des Scheitelpunktes B1 weist vorzugsweise eine Gesamtvariationsbreite (d.h. die doppelte Amplitude bei einem symmetrischen Verlauf der axialen Position) von ungefähr 50% bis 60% relative bezüglich der axialen Ausdehnung des Kolbenringes 1 auf. Die axiale Position des Scheitelpunktes B1 variiert bevorzugt in einem Bereich von ungefähr 25% bis 75% relative bezüglich der axialen Ausdehnung des Kolbenringes 1.

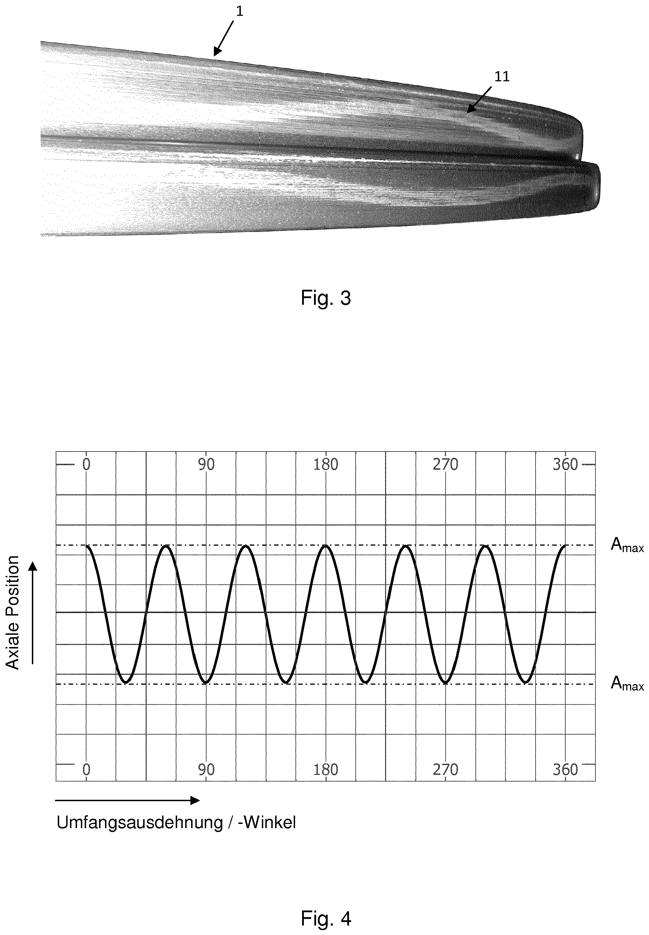

Eine weitere beispielhafte, erfindungsgemäße Ausführungsform des Kolbenringes 1 ist in den Figur 3 in perspektivischer Ansicht gezeigt. Wie aus Figur 3 weiterhin entnommen werden kann, können zwei erfindungsgemäße Kolbenringe als System Anwendung finden. Die Kolbenringe sind vorzugsweise hierbei derart ausgebildet, dass die Verläufe der axialen Positionen der jeweiligen Scheitelpunkte um 180° in der Phase gegeneinander verschoben sind.

Der Verlauf der axialen Position des Scheitelpunktes B1 ist bevorzugt stetig und kann ferner bevorzugt durch eine periodische, stetige Funktion beschrieben werden. Insbesondere ist der Verlauf der axialen Position des Scheitelpunktes B1 durch eine periodische, differenzierbare Funktion beschreibbar. Das heißt, dass beispielsweise der Verlauf der axialen Position des

Scheitelpunktes B1 werden kann, wie beispielsweise als Funktion des Umfangwinkels $\varphi$ und der Zahl der Perioden k:

$$P_{axial} = A_{max} \cdot \cos(k \cdot \varphi)$$

In Figur 4 ist obige beispielhafte Funktion zum besseren Verständnis dargestellt.

Der in der vorliegenden Anmeldung vorgeschlagene Kolbenring ist insbesondere für Kolben in einem System mit einem Durchmesser von größer als 400 mm.

Ein gemäß der vorliegenden Erfindung ausgebildeter Kolbenring kann vorzugsweise bei Kolben für Verbrennungsmotoren wie z.B. großvolumige Zweitakt-Verbrennungsmotoren oder Kompressoren in eine Kolbenringnut eingesetzt werden. Hierbei hat es sich gezeigt, dass einerseits der Ölverbrauch und andererseits der Leckgasdurchlass (Blow-By) gegenüber bekannten Ausführungen erheblich reduziert werden konnte. Es ist daher festzustellen, dass mit einem erfindungsgemäßen Kolbenring auf konstruktiv und herstellungsmäßig ein Kolbenring für Kolben eines Verbrennungsmotors oder Kompressors geschaffen wird, der hervorragende Ergebnisse bezüglich Leckgasdurchlass und Ölverbrauch bei sichergestellten Schmierverhältnissen erzielt.

Der Grundgedanke dieser Erfindung liegt darin, dass das Öl in Umfangsrichtung transportiert wird, um den Ölverbrauch zu senken. Die Lösung dieser Aufgabe wird dadurch erreicht, dass der Pivotpunkt bzw Scheitelpunkt in Umfangsrichtung sich über die axiale Höhe verändert, wobei aber auf der Lauffläche keine Ausnehmungen oder Löcher oder Schlitze vorhanden sind, wie beim Stand der Technik. Die Lauffläche bleibt quasi mit Ausnahme des Scheitelpunktes unverändert. Bei Ansicht von der Seite auf den Kolbenring ergibt sich ein sichtbares Profil einer Schlangenlinie bzw. Sinuslinie.

Bezugszeichenliste

1:      ein Kolbenring
3:      eine Lauffläche des Kolbenringes (die äußere, dem Verbrennungsraum abgekehrte Seite) bzw. eine außenseitige Umfangsfläche

5:      eine dem Brennraum zugewandte Flanke
6:      eine dem Ölraum zugewandte Flanke
7:      eine innenseitige Umfangsfläche

10:     ein konvex ballig ausgebildetes Laufflächenprofil
11:     eine Scheitelpunktlinie
B1:     ein Scheitelpunkt der Scheitelpunktlinie

30:     eine Gegenlauffläche z.B. Zylinderlaufbuche
31:     ein Brennraum
32:     ein Ölraum

**Patentansprüche**

1. Kolbenring mit einer außenseitigen Lauffläche (3), zwei Flanken (5, 6) und einer innenseitigen Umfangsfläche (7), wobei die Lauffläche (3) eine Profilierung aufweist, wobei das Profil der Lauffläche (3) im Wesentlichen konvex ballig ausgebildet ist und einen Scheitelpunkt (B1) aufweist,
**dadurch gekennzeichnet, dass**
die axiale Position des Scheitelpunktes (B1) in Umfangsrichtung variiert.

2. Kolbenring nach Anspruch 1, **dadurch gekennzeichnet, dass** Variation der axialen Position des Scheitelpunktes periodisch ist und bevorzugt
die Zahl der Perioden der periodisch variierenden, axialen Position ganzzahlig ist.

3. Kolbenring nach Anspruch 1 oder 2, **dadurch gekennzeichnet, dass**
der Verlauf der axialen Position des Scheitelpunktes (B1) im Wesentlichen symmetrisch bezüglich einer Ebene ist, die parallel zu der Mittelebene des Kolbenringes 1 ist oder identisch mit dieser ist.

**4.** Kolbenring nach Anspruch 1 oder 2, **dadurch gekennzeichnet, dass**
der Verlauf der axialen Position des Scheitelpunktes (B1) asymmetrisch bezüglich einer Ebene ist, die parallel zu der Mittelebene des Kolbenringes 1 ist oder identisch mit dieser ist.

**5.** Kolbenring nach einem der Ansprüche 1 bis 3, **dadurch gekennzeichnet, dass**
die axiale Position des Scheitelpunktes (B1) weist eine Gesamtvariation von ungefähr 50% bis 60% relativ zu der axialen Ausdehnung des Kolbenringes (1) auf.

**6.** Kolbenring nach einem der Ansprüche 1 bis 4, **dadurch gekennzeichnet, dass**
die Zahl der Perioden des Verlaufs der axialen Position des Scheitelpunktes (B1) in einem Bereich zwischen einschließlich 4 und einschließlich 36 liegt.

**7.** System aus mindestens zwei Kolbenringen,
**dadurch gekennzeichnet, dass**
zwei der Kolbenringe jeweils ein Kolbenring gemäß einem der Ansprüche 1 bis 5 ist, und
die Verläufe der periodisch variierenden, axialen Positionen der Scheitelpunkte der mindestens zwei Kolbenringe um 180° in der Phase versetzt sind.

**Claims**

**1.** A piston ring having an outer running face (3), two flanks (5, 6) and an inner circumferential face (7), the running face (3) having profiling,
the profile of the running face (3) being substantially convexly curved and having an apex (B1),
**characterised in that**
the axial position of the apex (B1) varies in the circumferential direction.

**2.** The piston ring according to claim 1, **characterised in that** variation in the axial position of the apex is periodic and preferably
the number of periods of the periodically varying axial position is integral.

**3.** The piston ring according to claim 1 or 2, **characterised in that**
the course of the axial position of the apex (B1) is substantially symmetrical in relation to a plane that is parallel or identical to the centre plane of the piston ring 1.

**4.** The piston ring according to claim 1 or 2, **characterised in that**
the course of the axial position of the apex (B1) is asymmetrical in relation to a plane that is parallel to the centre plane of the piston ring 1 or identical with it.

**5.** The piston ring according to any one of claims 1 to 3, **characterised in that**
the axial position of the apex (B1) has a total variation of approximately 50% to 60% relative to the axial extent of the piston ring (1).

**6.** The piston ring according to any one of claims 1 to 4, **characterised in that**
the number of periods of the course of the axial position of the apex (B1) lies in a range between 4 inclusive and 36 inclusive.

**7.** A system consisting of at least two piston rings,
**characterised in that**
two of the piston rings are each a piston ring according to any one of claims 1 to 5, and
the courses of the periodically varying axial positions of the apexes of the at least two piston rings are phase-offset by 180°.

**Revendications**

**1.** Segment de piston avec une surface de portée du côté extérieur (3), deux flancs (5, 6) et une surface périphérique du côté intérieur (7), la surface de portée (3) comportant un profilage, le profil de la surface de portée (3) étant constitué pour l'essentiel de manière bombée convexe et comportant un sommet variable (B1),
**caractérisé en ce que** la position axiale du sommet variable (B1) varie dans la direction périphérique.

2. Segment de piston selon la revendication 1, **caractérisé en ce que** la variation de la position axiale du sommet variable est périodique et de préférence le nombre des périodes de la position axiale variant périodiquement est en nombres entiers.

3. Segment de piston selon la revendication 1 ou 2, **caractérisé en ce que** la trajectoire de la position axiale du sommet variable (B1) est pour l'essentiel symétrique par rapport à un plan qui est parallèle au plan médian du segment de piston 1 ou est identique à celui-ci.

4. Segment de piston selon la revendication 1 ou 2, **caractérisé en ce que** la trajectoire de la position axiale du sommet variable (B1) est asymétrique par rapport à un plan qui est parallèle au plan médian du segment de piston 1 ou est identique à celui-ci.

5. Segment de piston selon l'une quelconque des revendications 1 à 3, **caractérisé en ce que** la position axiale du sommet variable (B1) comporte une variation totale d'environ 50% à 60% par rapport à la dilatation axiale du segment de piston (1).

6. Segment de piston selon l'une quelconque des revendications 1 à 4, **caractérisé en ce que** le nombre de périodes de la trajectoire de la position axiale du sommet variable (B1) se situe dans une gamme entre 4 et 36 inclus.

7. Système composé d'au moins deux segments de piston, **caractérisé en ce que** deux segments de piston sont respectivement un segment de piston selon l'une quelconque des revendications 1 à 5 et les trajectoires des positions axiales à variation périodique des sommets variables d'au moins deux segments de piston sont décalées en phase de 180°.

Axiale
Ausdehnung

100% ──
75% ──
50% ──
25% ──
0% ──

Fig. 1(a)

Axiale
Ausdehnung

100% ──
75% ──
50% ──
25% ──
0% ──

Fig. 1(b)

Axiale
Ausdehnung

100% ──
75% ──
50% ──
25% ──
0% ──

Fig. 1(c)

Fig. 2(a)

Fig. 2(b)

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3851889 A
- DE 871390